# FASCICULE DE BREVET EUROPEEN

(11) **EP 2 178 749 B1**
(45) Date de publication et mention de la délivrance du brevet: **30.04.2014**
(21) Numéro de dépôt: 08826799.2
(22) Date de dépôt: 10.07.2008
(51) Int. Cl.: B64C 13/06, B64D 11/06, B60N 2/02, B64D 11/00

(54) **POSTE DE PILOTAGE PERFECTIONNÉ D'AVION**
ERWEITERTES FLUGZEUGCOCKPIT
ADVANCED AIRCRAFT COCKPIT

(30) Priorité: 12.07.2007 FR 0705051
(43) Date de publication de la demande: 28.04.2010
(73) Titulaire: AIRBUS OPERATIONS (S.A.S), 31060 Toulouse (FR)
(72) Inventeur: ORGERIE, Jean-Luc, 31000 Toulouse (FR); MARQUET, Gilles, 31300 Toulouse (FR)
(74) Mandataire: Gicquel, Olivier Yves Gérard
(86) Numéro de dépôt international: PCT/FR2008/051302
(87) Numéro de publication internationale: WO 2009/016300

(56) Documents cités:
- WO-A-97/42050
- DE-A1- 19 522 897
- US-A- 4 484 722
- US-A- 4 698 571
- US-A1- 2003 195 686
- US-A1- 2005 261 807
- US-A1- 2006 015 221

## Description

La présente invention appartient au domaine des postes de pilotage des avions de transport civils.

Plus particulièrement l'invention concerne un poste de pilotage pour avion dans lequel des réglages liés à l'ergonomie du poste de pilotage tels que ceux des sièges occupés par les pilotes pendant le vol, les palonniers de pilotage ou d'autres éléments de confort et également de sécurité comportent des fonctions avancées.

Un poste de pilotage d'avion est un espace totalement organisé dans lequel le confort des pilotes doit être assuré pour éviter une fatigabilité préjudiciable à la sécurité de la conduite de l'avion et garantir l'accès à de nombreux instruments et à de nombreuses commandes essentielles agencés dans un espace restreint

Pour visualiser sans difficulté les instruments et accéder aux commandes sans risque d'erreur, l'équipage, essentiellement le commandant de bord et le copilote d'un avion de transport civil, occupe pendant le vol et sa préparation des positions précises dans le poste de pilotage.

En outre dans ces positions que les pilotes peuvent occuper pendant des durées plus ou moins longues, la température, la ventilation et l'éclairage notamment doivent être tels que chaque pilote n'est pas gêné pour réaliser ses diverses tâches, surveillance des instruments et actions sur les commandes en particulier, ni fatigué par des conditions non optimales de réglage de ces différents paramètres.

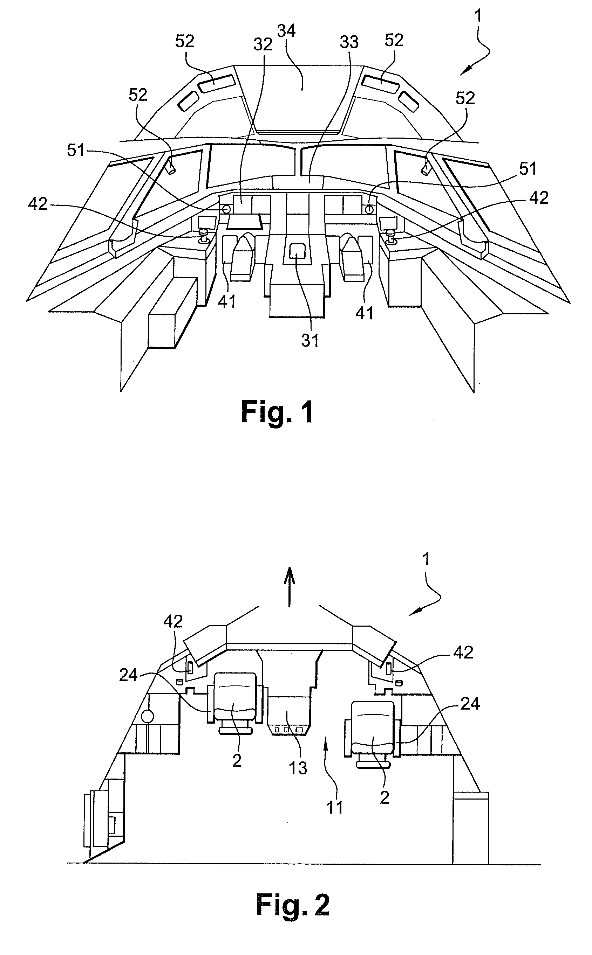

En pratique, dans un poste de pilotage d'avion 1 comme illustré sur la figure 1 et sur la figure 2, la position principale des pilotes pendant un vol correspond à une position dite de pilotage dans laquelle chaque pilote est assis sur un siège 2 comportant des réglages par lesquels chaque pilote se place dans la position de pilotage correspondant à sa morphologie personnelle.

En général, outre la position de pilotage, les sièges 2 des postes de pilotage d'avion peuvent prendre diverses positions qui, même si elles ne correspondent pas à des positions de pilotage, sont essentielles pour les membres d'équipage.

Une première de ces positions est une position dite de stockage, illustrée sur la figure 2 pour le siège copilote à droite dans le poste de pilotage 1 suivant un sens de vol de l'avion, dans laquelle le siège d'un pilote est dans une position permettant au pilote d'accéder à son siège. En effet la disposition des structures est telle que lorsque le siège est dans la position de pilotage, illustrée sur la figure 2 pour le siège de commandant de bord à gauche dans le poste de pilotage, le pilote n'est pas en mesure d'accéder normalement au siège. La position de stockage est donc une position, en général une position dans laquelle le siège est reculé et déplacé latéralement, qui libère un espace 11 sur le côté du siège 2 permettant au pilote de s'asseoir sans effectuer de contorsions particulières.

D'autres de ces positions, qui dépendent du pilote utilisant le siège, correspondent à des positions de repos ou de moindre vigilance qui permettent, au cours d'un vol de longue durée par exemple, à l'un des pilotes de se mettre dans une position de détente musculaire sans quitter sa place de pilotage lorsque l'autre pilote assure la surveillance et les fonctions essentielles du pilotage.

D'autres éléments du poste de pilotage 1 sont réglables en fonction du pilote ou en fonction de conditions extérieures.

Parmi ces autres éléments se trouvent notamment les palonniers 41 pouvant être ajustés suivant une position longitudinale, des sources d'aération 51 dont les débits, sens de soufflage et températures doivent êtres contrôlés, des éclairages 52 dont les intensités et orientations doivent être contrôlées.

Pour permettre à chaque pilote d'un poste de pilotage 1 de se placer dans une position optimale correspondant aux besoins du moment, et ceci quelle que soit la morphologie dudit pilote, généralement les sièges 2 des pilotes sont réglables, c'est à dire que les sièges 2 sont pourvus de différents moyens permettant de modifier les positions de parties mobiles par des réglages considérés comme nécessaires ou comme utiles.

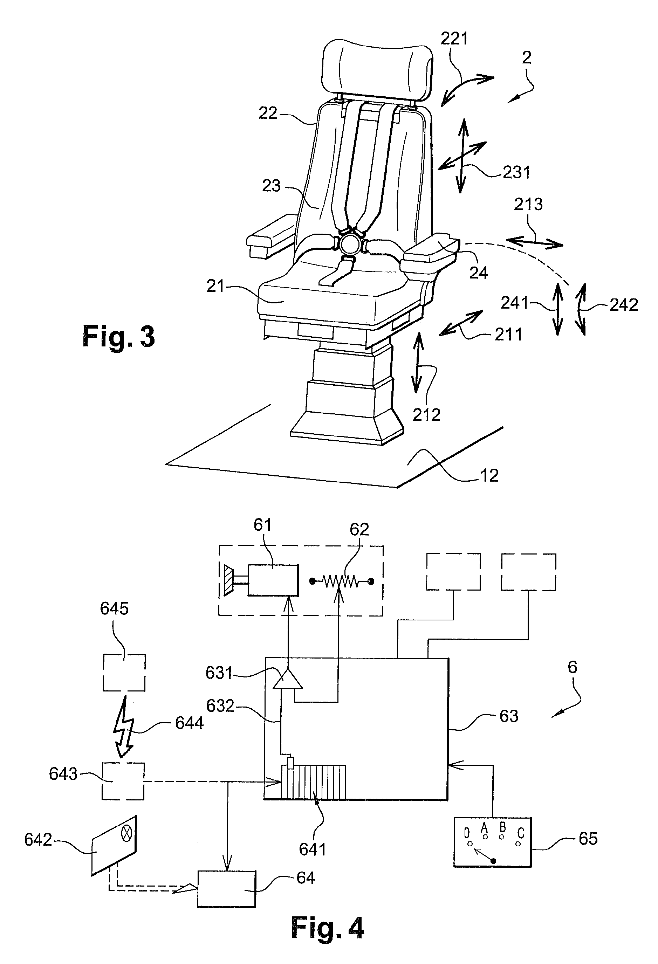

Dans la plupart des sièges 2 de pilote d'avion de transport connus, tel que le siège présenté sur la figure 3, une assise 21 du siège se déplace suivant d'une part un mouvement longitudinal avant-arrière 211 par rapport au plancher 12 du poste de pilotage 1 de l'avion et se déplace suivant un mouvement vertical haut-bas 212 par rapport au plancher 12.

Par ces mouvements avant-arrière 211 et haut-bas 212, chaque pilote est en mesure de se placer personnellement, quelles que soient sa taille et sa morphologie, plus précisément de placer ses yeux, en un point de référence dans l'avion qui correspond compte tenu de sa place dans le poste de pilotage 1 à un point lui donnant la meilleure visibilité des instruments 32 et le meilleur accès aux commandes 31, 33, 34.

En général le mouvement longitudinal 211 est prolongé à une extrémité arrière de la course du siège par un mouvement latéral 213 qui libère le passage 11 pour le pilote, a priori entre le siège et la console centrale 13 du poste de pilotage.

Un autre mouvement connu des sièges de pilotes d'avion correspond à une Inclinaison variable 221 d'un dossier 22 articulé sur l'assise 21 et le cas échéant associé à un mouvement avant-arrière et ou haut-bas 231 par rapport au dossier 22 d'un appui lombaire 23.

Dans certains postes de pilotage évolués d'avions de transports civils pourvus, comme sur les figures 1 et 2 données à titre d'illustration, de manches de pilotages latéraux 42 associés à des commandes de vol électriques, des accoudoirs, dit accoudoirs de pilotage 24, sont agencés près des manches de pilotage latéraux 42 par exemple solidaires des sièges.

De tels accoudoirs de pilotage 24 sont des équipements essentiels qui permettent d'actionner les organes de pilotage 42 sur de longues durées et avec la précision requise sans fatigue pour le pilote.

Dans ce cas à nouveau des réglages de l'accoudoir, réglage en hauteur 241 et réglage en inclinaison 242, permettent à chaque pilote en fonction de sa morphologie et de ses critères propres de confort de trouver la meilleure position de l'accoudoir 24.

Un problème dans ces types d'équipements nécessitant des réglages propres au pilote vient de la nécessité pour le pilote d'actionner des commandes associées aux dits équipements pour chaque réglage 211, 212, 221, 231, 241, 242... et de rechercher après chaque action le meilleur réglage lui correspondant pour l'équipement recherché.

Cette situation se produit notamment chaque fois que le pilote prend en charge un avion, dans une moindre mesure lorsque ledit pilote revient à son siège après l'avoir quitté et pour cela a placé ledit siège dans la position de stockage et chaque fois qu'il désire changer de position ou de réglages.

Pour résoudre ces difficultés, deux perfectionnements principaux ont été apportés aux sièges de pilotage 2.

Le premier perfectionnement correspond à la motorisation de certains déplacements du siège 2, en particulier des plus pénibles et des plus fréquemment modifiés que sont les mouvements avant-arrière et stockage 211,213 et haut-bas 212 de l'assise 21 du siège.

Cette motorisation rend pour le pilote les mouvements plus simples à réaliser et le positionnement des yeux plus précis.

Cependant deux commandes, correspondant aux deux mouvements, doivent être actionnées et la recherche de la position idéale se fait souvent par une série d'impulsions de commande pour affiner ladite position, ce qui a pour effet de beaucoup solliciter les organes de motorisation du siège et est susceptible d'affecter leur fiabilité opérationnelle.

Le second perfectionnement correspond à des indicateurs de position, chiffres ou lettres sur une échelle défilante ou fixe associée à un curseur, qui permet au pilote lorsqu'il a réalisé une première fois les réglages souhaités de les noter pour être en mesure de se placer, à l'aide des échelles, à nouveau sur ces réglages sans effectuer une recherche de position idéale plus ou moins empirique.

Cette solution nécessite cependant au pilote de mémoriser chaque réglage pour chaque position. En pratique seuls des réglages importants tels que ceux donnant la position des accoudoirs 24 de pilotage comportent des échelles de position et sont utilisés par les pilotes et, dans certains sièges, les positions longitudinale et en hauteur de l'assise 21.

Pour effectuer les autres réglages affectant l'ergonomie du poste de pilotage sont généralement agencés, sans que cette liste ne doive être considérée comme exhaustive :
- une commande mécanique pour ajuster la distance des palonniers 41 à l'assise du siège 2 lorsque ledit siège est en position de pilotage, parfois associée à une échelle donnant un repère de position pouvant être retenu par le pilote ;
- des commandes mécaniques pour le réglage de l'inclinaison 221 du dossier 22 et les réglages 231 de la position de l'appui lombaire 23 ;
- des sorties d'aérateurs 51 pouvant être individuellement ou collectivement modifiées en orientation et ou en débit et ou en température ;
- des éclairages 52 pouvant être ajustés en intensité par des commandes électriques et pour certains éclairages de type liseuse individuelle pouvant être mécaniquement ajustés en orientation du faisceau lumineux émis par ledit éclairage.

La multitude de ces réglages, et des commandes associées, dont certains doivent être modifiés plusieurs fois au cours d'un vol normal, et ajustés avec précision dans certains cas, sont pour les pilotes une source de travail qui s'ajoute à la charge de pilotage proprement dite et nécessite de retenir, lorsque des échelles existent, les valeurs associées aux repères de position.

En outre si le pilote qui cherche à ajuster des positions particulières des différents éléments réglables ne trouve pas les positions optimales de chaque élément réglable, il risque sans s'en rendre compte de prendre lui-même des attitudes, pour compenser les écarts des réglages par rapport aux optima, qui sur des périodes plus ou moins longues sont sources de fatigue supplémentaires, voir de courbatures.

Pour répondre à cette difficulté il est connu de la demande Internationale WO9742050 d'équiper des sièges pour passagers, pourvus de moyens d'actionnement de différentes parties du siège, de moyens de mémorisation de positions réglées par un utilisateur et de rappel de ces positions par l'utilisateur. La solution envisage également qu'un utilisateur puisse mémoriser les positions sur une carte mémoire personnelle.

Cette solution impose toutefois que l'occupant du siège réalise à chaque fois qu'un siège lui est attribué, ou s'il n'est pas en possession de sa carte, une opération de mise en mémoire de réglages préférés.

Si dans le cas de sièges pour passagers il n'y a pas d'inconvénient particulier à réaliser ces réglages manuellement pour les mémoriser à de multiples reprises, il est beaucoup plus contraignant pour les membres des équipages techniques pour lequel les réglages doivent être précis et dont les charges de travail dans un poste de pilotage sont élevées et où il est souhaitable que les opérations de mémorisation soient réalisées un minimum de fois.

Il y a donc un intérêt à réaliser un poste de pilotage dans lequel les éléments réglables du poste de pilotage, tels que les sièges des pilotes, les palonniers de pilotage, les éclairages et ou les aérateurs, sont en mesure de prendre des positions particulières fonction de considérations propres au pilote concerné, sur des instructions simplifiées du pilote sans que le pilote n'ait à rechercher de manière récurrente les réglages qui lui conviennent.

Pour cela l'invention propose de réaliser un système dont un poste de pilotage d'un avion, comportant des équipements réglables de confort et ou de sécurité dont les réglages sont modifiés par un pilote en fonction de critères personnels, dans lequel au moins certains éléments des équipements réglables sont commandés par un système de gestion des réglages.

Par une sélection unique d'une position souhaitée par le pilote parmi au moins deux positions, le réglage de chacun des dits éléments est modifié par le système de gestion des réglages depuis une valeur actuelle jusqu'à une valeur prédéterminée caractéristique de la position sélectionnée.

Les données caractéristiques des réglages des éléments commandés par le système de gestion des réglages, au moins pour celles fonction du pilote, sont mémorisées par une station sol du système et transmises par une liaison à des moyens de reconnaissance du système de gestion en fonction des pilotes devant prendre en charge l'avion. Ainsi le pilote n'a plus à se préoccuper de la recherche de ses réglages souhaités et prend en charge un avion ayant en mémoire les réglages qu'il souhaite pour ses équipements de poste de pilotage.

Les données sont le cas échéant également mémorisées également dans un média mobile, pour être portées par le pilote lorsque celui-ci change d'avion ou reprend un avion utilisé par un autre pilote, et lues par des moyens de reconnaissance dudlt système de gestion.

Afin de générer les données devant être mémorisées par la station sol et le cas échéant sur le média mobile, les données caractéristiques des réglages des éléments commandés par le système de gestion des réglages correspondent, pour chaque position apte à être sélectionnée par le pilote, à des valeurs mesurées par des capteurs lorsque la position correspondante a préalablement été réglée manuellement.

Lorsque les réglages doivent être modifiés pour correspondre à une autre position, pour des raisons de sécurité les modifications de réglages sont commandées par un sélecteur de position désirée sur lequel une action de commande doit être maintenue pendant la durée des modifications.

Afin de permettre au pilote d'ajuster une position ou d'effectuer des réglages manuellement en cas de défaillance du système de gestion des réglages, des commandes manuelles sont agencées dans le poste de pilotage pour modifier les réglages.

En fonction du niveau de sécurité et du niveau de confort souhaité, le système de gestion des réglages commande :
- le réglage d'une position longitudinale d'une assise d'un siège de pilotage et ou ;
- le réglage d'une position transversale d'une assise d'un siège de pilotage et ou ;
- le réglage d'une position en hauteur au-dessus d'un plancher du poste de pilotage d'une assise d'un siège de pilotage et ou ;
- le réglage d'une position d'un palonnier de pilotage et ou ;
- le réglage d'une position en hauteur et ou en inclinaison d'un accoudoir de pilotage et ou ;
- le réglage en inclinaison d'un dossier d'un siège de pilotage et ou d'une position en hauteur et ou en profondeur d'un appui lombaire du dossier et ou ;
- le réglage d'un, deux ou plusieurs aérateurs individuels en orientations et ou en débits et ou en températures de soufflage et ou ;
- le réglage d'un, deux ou plusieurs éclairages individuels en orientation et ou en intensité lumineuse.

Pour prendre en considération le fait qu'un pilote peut être conduit à piloter des avions comportant des postes de pilotage différents, le média mobile comporte en mémoire de préférence deux ou plusieurs ensembles de données caractéristiques des réglages des éléments commandés par le système de gestion des réglages associés à des modèles de postes de pilotage différents et le système de gestion des réglages comporte des moyens de sélection des données correspondant au poste de pilotage considéré.

Avantageusement le média mobile correspond à un moyen d'identification du pilote qui est utilisé dans un autre dispositif de l'avion tel que des moyens d'authentification du pilote.

La description de l'invention est faite en référence aux figures qui Illustrent schématiquement et de manière non limitative :
- figure 1 : déjà citée, une vue générale en perspective depuis l'arrière vers l'avant de l'intérieur d'un poste de pilotage d'un avion civil de transport moderne sans les sièges des pilotes ;
- figure 2 : déjà citée, un plan d'aménagement simplifié vu de dessus d'un poste de pilotage correspondant au poste de la figure 1 dont les sièges des pilotes sont présentés en position pilotage à gauche et en position stockée à droite ;
- figure 3 : déjà citée, une vue en perspective d'un siège de pilotage pourvu d'un accoudoir de pilotage pour un poste tel que celui de la figure 1
- figure 4 : un schéma de principe du système de gestion des réglages du poste de pilotage.

Un poste de pilotage 1 tel que présenté sur la figure 1 suivant l'invention comporte un système de gestion des réglages d'équipements dont des positions optimales, ou certains réglages fonctionnels idéaux, dépendent d'un pilote utilisant les dits équipements dans ledit poste de pilotage.

Pour les besoins de la description d'un mode détaillé de l'invention, les seuls équipements considérés sont des sièges 2 utilisés par les pilotes et des palonniers 41 situés devant chaque pilote.

Toutefois les principes de l'invention sont applicables à d'autres équipements tels que des sorties d'aérateurs ou des éclairages par exemple et de manière générale à tout élément pour lequel chaque pilote est en mesure de modifier un ou des réglages, position, orientation, intensité, température ... en fonction de conditions qui lui sont propres et sont susceptibles d'être différentes d'un pilote à un autre occupant la même place dans l'avion.

Afin de réaliser les déplacements d'un siège 2 ou d'un palonnier 41, des actionneurs 61 sont agencés dans ledit siège et ledit palonnier de sorte que chaque actionneur est en mesure de réaliser un déplacement d'un élément réglable, auquel ledit actionneur est associé, dudit siège ou dudit palonnier et dont le réglage doit être modifiable par le pilote.

Avantageusement les actionneurs 61 ne sont utilisés que pour automatiser des réglages importants et ou pour des réglages que le pilote est amené à modifier souvent au cours d'un vol.

Par réglages importants il convient de considérer par exemple des déplacements du siège 2 qui permettent à un pilote de se placer dans une position de référence de pilotage en fonction de sa morphologie et d'ajuster la position des palonniers ou d'un accoudoir de pilotage 24 pour un pilotage optimal.

Les déplacements que le pilote réalise souvent au cours d'un vol sont par exemple le passage d'un siège 2 d'une position de pilotage à une position stockée et inversement car il est nécessaire de réaliser ce type de déplacement du siège 2 pour permettre au pilote de quitter momentanément sa place de pilotage.

A contrario un déplacement que le pilote ne modifie que de manière exceptionnelle au cours d'un vol correspond par exemple au réglage d'un appui lombaire 23 solidaire d'un dossier 22.

L'invention est décrite de manière détaillée avec comme exemple des déplacements considérés comme importants pour le siège 2 :
- un mouvement longitudinal dit avant-arrière 211 d'une assise 21 du siège par rapport à un axe longitudinal de l'avion ;
- un mouvement de stockage 213 de l'assise 21 du siège ;
- un mouvement vertical dit haut-bas 212 de l'assise 21 du siège par rapport à un plancher 12 du poste de pilotage ;
- un mouvement vertical 241 de l'accoudoir de pilotage 24 pour régler une hauteur dudit accoudoir ;
- un mouvement de rotation 242 de l'accoudoir de pilotage 24 dans un plan sensiblement vertical pour régler une inclinaison dudit accoudoir.

Pour chacun des éléments réglables du siège ou de son accoudoir de pilotage ou des palonniers pour lequel un actionneur 61 assure des mouvements un moyen de mesure 62 de la position délivre un signal caractéristique d'une position de l'élément réglable qui est actionné par ledit actionneur.

Un tel moyen de mesure 62 de position est avantageusement réalisé par tout moyen connu pour mesurer une position linéaire ou une position angulaire, tels que règles digitales, potentiomètres, capteurs incrémentaux ..., aptes à délivrer un signal électrique ou autre, optique par exemple, en fonction de la position soit de l'élément réglable considéré soit de l'actionneur 61 lui-même dont la position est équivalente dans certains cas. Le type de capteur du moyen de mesure 62 est le cas échéant adapté au paramètre à mesurer s'il ne s'agit pas d'une position linéaire ou angulaire.

Les signaux représentatifs de la position des différents éléments réglables dont les mouvements sont assurés par les actionneurs 61 sont reçus par un équipement de gestion de positions 63 qui compare la position mesurée 631 avec une position souhaitée 632 à un moment donné pour chacun des éléments réglables.

La position souhaitée 632 pour chacun des éléments est déterminée par deux conditions.

Une première condition correspond à la morphologie du pilote devant occuper la place de pilotage correspondant au siège 2 et au palonnier 41 considéré.

Un avion donné pouvant être piloté a priori par tout pilote qualifié d'une compagnie, et l'équipage d'un vol donné pouvant être décidé ou modifié au dernier moment, l'équipement de gestion de positions 63 comporte des moyens 64 de reconnaissance du pilote, plus particulièrement des moyens d'acquisition de valeurs de paramètres 641, correspondant à des réglages de positions pour les éléments, tels que déterminés pour le pilote considéré.

Une seconde condition correspond à la position choisie par le pilote parmi une liste de positions dans lesquelles il doit pouvoir se placer.

A titre non limitatif les positions suivantes sont identifiées qui sont susceptibles d'être choisies par le pilote :
- une position dite « pilotage » correspondant aux réglages du siège, assise et accoudoir de pilotage, et des palonniers dans des conditions optimales de pilotage ;
- une position dite « stockée » dans laquelle le siège est dans une position reculée et décalée latéralement pour libérer un accès 11 vers l'avant du siège ;
- une ou plusieurs positions « repos » dans lesquelles le siège est dans des positions longitudinales intermédiaires plus arrières que la position « pilotage » de sorte à donner au pilote sur le siège la possibilité de mouvements plus amples lorsqu'il n'est pas en charge du pilotage. Cette ou ces positions « repos » sont le cas échéant associées à des positions particulières d'inclinaisons du dossier 22 lorsque ledit dossier est également pourvu d'un actionneur.

Pour des raisons de sécurité, les mouvements des éléments réglables mus par les actionneurs 61 sont inhibés en absence d'action du pilote concerné.

Le pilote détermine une position souhaitée, « pilotage », « stockée », « repos1 » ...comme déjà décrit, par exemple au moyen d'un sélecteur 65, et actionne une commande de changement de position du type à action maintenue, par exemple du type bouton à maintenir enfoncé, c'est à dire que le ou les actionneurs 61 fonctionnent pour amener chaque élément réglable vers la position souhaitée correspondante si et seulement si le pilote maintient la commande active. Si le pilote relâche ladite commande de changement de position, tous les actionneurs 61 cessent de fonctionner, même si la position souhaitée n'est pas atteinte pour tous les éléments réglables.

Ce type de commande permet d'éviter des blessures par coincement, par exemple le coincement d'un bras ou d'une jambe entre le siège et une structure dans le poste de pilotage, car dès que le pilote relâche la commande tous les mouvements automatiques des éléments réglables concernés sont stoppés.

Bien évidemment si le pilote maintien la commande active, les mouvements des éléments actionnés se poursuivent jusqu'à atteindre les positions définies pour chaque élément réglable pour la position sélectionnée puis sont arrêtés automatiquement.

Lorsque tous les éléments réglables sont à l'arrêt, situation que le pilote perçoit soit de manière sensorielle par l'absence de mouvement et ou de manière accessoire par un voyant ou un autre signal lui signalant cette situation, il relâche la commande et les actionneurs 61 ne sont alors plus alimentés.

Les actionneurs 61 n'étant plus alimenté sauf action du pilote, il n'y a pas de risque de déclenchement intempestif d'un mouvement, par exemple suite à une défaillance d'un capteur 62, qui ne serait pas commandé par le pilote et qui autrement pourrait le surprendre dans une phase de vol pouvant être critique.

Le fonctionnement d'un actionneur 61 pour amener un élément réglable vers la position souhaitée est assuré de manière conventionnelle par la comparaison de la position mesurée par les capteurs 62 de position de chaque élément réglable mu par un actionneur 61 avec la position souhaitée 632 associée à la position sélectionnée par le pilote. La comparaison est réalisée par l'équipement de gestion de position 63, avantageusement par des moyens de calcul incorporés dans ledit équipement, qui alimentent les actionneurs 61 ou qui commandent des alimentations des dits actionneurs.

Dans un autre mode de réalisation du système de gestion des réglages 6, les actionneurs 61 sont pourvus d'une logique Intégrée et reçoivent de l'équipement de gestion de position 63 un signal de la position à atteindre et l'actionneur gère lui-même son alimentation pour atteindre la position souhaitée. Dans ce mode de réalisation, les actionneurs 61 reçoivent également un signal d'inhibition pour éviter tout mouvement Intempestif en absence de commande du pilote, le dit signal d'inhibition pouvant consister en une coupure de l'alimentation, électrique par exemple, de l'actionneur 61.

Avantageusement, l'équipement de gestion de positions 63 active les différents actionneurs suivant des séquences et des vitesses de déplacements établies en fonction de critères adaptés au changement de position considéré, par exemple un critère de vitesse pour aller rapidement vers la position de pilotage lorsque cette position est sélectionnée et un critère de confort associé à des vitesses de déplacement réduites pour aller vers une position de repos.

Dans un poste de pilotage d'avion, il est important qu'un pilote puisse réaliser les actions qu'il souhaite sans que celles-ci soient totalement imposées par un automatisme.

Ainsi lorsque le siège 2 et les palonniers 41 ont atteint une position, par une sélection du pilote comme il vient d'être décrit, le pilote conserve la possibilité de modifier la position des différents éléments réglables.

A cette fin, chaque élément réglable est apte à être commandé manuellement par le pilote indépendamment des autres éléments réglables.

Pour cela des commandes électriques et ou des commandes mécaniques permettent de surpasser les commandes du système de gestion des réglages 6 soit en agissant sur les actionneurs 61 pour un surpassement motorisé, soit de manière totalement mécanique ce qui permet de modifier et d'ajuster les différents éléments réglables, même en absence partielle ou totale de fonctionnement du système de gestion des réglages 6 et en particulier d'alimentation des actionneurs 61, que les alimentations des dits actionneurs soient défaillantes ou que le pilote ait décidé d'inhiber les dites alimentations.

Pour atteindre une position donnée commandée par le pilote, le système de gestion des réglages 3 doit connaître les positions correspondantes de chaque élément réglable qui doivent être atteintes.

Comme il a déjà été précisé, ces positions sont propres à chaque pilote que le système de gestion des réglages ne connaît pas a priori.

Le dispositif 64 de reconnaissance du pilote reçoit d'un système de liaison 643 avec une station sol 645 de la compagnie qui exploite l'avion, de préférence une liaison radio ou infrarouge 644, par exemple une liaison dite « datalink » ou « gatelink », les données personnelles associées au pilote devant prendre en charge l'avion et comportant les positions propres du pilote.

Dans une forme de réalisation, le dispositif 64 de reconnaissance du pilote comporte également des moyens de lectures de données, représentatives des réglages à réaliser pour chaque position propre au pilote, mémorisées sur un média mobile 642 détenu par le pilote et qui lui est personnel.

Dans une étape initiale lorsque les données nécessaires ne sont pas connues de la dite station sol, le pilote exécute une séquence de mémorisation des données correspondant à chaque position devant être réglée automatiquement.

Pour cela le pilote ajuste manuellement la position de son siège et des palonniers successivement dans les différentes positions idéales correspondant à sa morphologie.

Pour chaque position obtenue le pilote valide les réglages effectués qui sont alors enregistrés par l'équipement 63 en utilisant les signaux reçus des capteurs de position et transmis à la station sol 645 et le cas échéant copiés sur le média mobile 642.

Il n'est pas nécessaire de réaliser une opération de mémorisation pour des positions qui sont indépendantes du pilote, par exemple la position « stockée ». Pour une telle position les réglages correspondants sont avantageusement mémorisés dans le système de gestion des réglages 6 de l'avion et ne sont pas modifiables par le pilote.

Les données 641 étant mémorisées, la station sol 645 au moyen de la liaison 644 est alors en mesure de transmettre les dites données dans tout poste de pilotage 1 au système de gestion des réglages 6 par une opération de transmission et le cas échéant au moyen du média mobile 642 par une opération de lecture du dit média mobile.

Le média mobile 642 est essentiellement un moyen de mémorisation amovible qui peut prendre de nombreuses formes, par exemple une mémoire numérique réinscriptible telle qu'une mémoire flash pouvant être placée sur une carte support. La dite carte support est en outre avantageusement un moyen avancé d'identification tel qu'un badge électronique qui permet d'identifier la qualité de pilote autorisé sur l'avion considéré et d'activer les fonctions vitales de l'avion avant la mise en route et le décollage afin d'éviter des actions malveillantes au sol par des tiers non autorisés.

Divers perfectionnements sont le cas échéant incorporés au poste de pilotage 1 pour son fonctionnement avec le système de gestion des réglages 6.

Ainsi les données enregistrées dans le média mobile 642 sont associées à une identification du modèle d'avion concerné et plusieurs jeux de données sont si besoin mémorisés, chaque jeu de données correspondant à un modèle d'avion que le pilote utilise. Dans ce cas le système de gestion des mouvements 6 du poste de pilotage 1 est apte à sélectionner le jeu de données adapté sur le média mobile.

Lorsque le pilote utilise pour la première fois un modèle d'avion, le dispositif vérifle dans un premier temps si parmi les jeux de données mémorisés un jeu est compatible avec le poste de pilotage dudit modèle d'avion, par exemple un poste dont les réglages sont identiques en raison de l'appartenance à une famille homogène.

Dans le cas où aucun jeu compatible n'est détecté, le dispositif signale au pilote que la séquence de mémorisation doit être effectuée, ce que le pilote reste libre de faire ou non immédiatement ou de réaliser ultérieurement.

Dans une forme particulière de réalisation de l'invention des capteurs de position de certains éléments mobiles non pourvus d'actionneurs commandés par l'équipement de gestion de positions 63 sont utilisés pour informer le système de gestion des réglages 6 des positions des dits éléments mobiles afin que des mouvements réalisés par les commandes du système de gestion de réglages 6 lors de changements automatiques de position et/ou des mouvements réalisés avec des actionneurs mais commandés manuellement soient inhibés ou soient réalisés avec des séquences particulières lorsque des risques d'interférences avec des éléments fixes du poste de pilotage existent.

Par exemple des mouvements de recul de l'assise d'un siège sont limités ou inhibés lorsque le dossier est incliné et qu'un recul trop important conduirait à un contact du dossier avec une cloison arrière.

## Revendications

1. Système comportant un poste de pilotage (1) d'un avion, ledit poste de pilotage comportant au moins un élément réglable d'au moins un équipement réglable (2, 24, 41, 51, 52) de confort et ou de sécurité dont le réglage est modifiable entre deux ou plusieurs valeurs par un pilote, les dites valeurs étant établies préalablement en fonction de critères personnels dudit pilote, l'au moins un élément réglable (2, 24, 41, 51, 52) étant commandé par un système de gestion des réglages (6) comportant une mémoire de données (641) caractéristiques desdites valeurs établies préalablement et comportant une commande du poste de pilotage de changement de réglages telle qu'une action par le pilote sur ladite commande modifie le réglage du au moins un élément réglable depuis une valeur actuelle jusqu'à une valeur prédéterminée caractéristique d'un réglage sélectionné souhaité par le pilote parmi au moins deux réglages différents, **caractérisé en ce que** le système comporte une station sol (645) de transmission, par une liaison (644) à des moyens de reconnaissance (64) du système de gestion des réglages (6) de l'avion, des données (641) caractéristiques des réglages des éléments commandés par le système de gestion des réglages (6) et fonction du pilote, mémorisées par ladite station sol (645).

2. Système suivant la revendication 1 dans lequel le système de gestion des réglages (6) comporte dans le poste de pilotage (1) une commande de validation des réglages pour mémoriser les données (641) caractéristiques des réglages des éléments commandés par le système de gestion des réglages (6) correspondant à un réglage préalablement effectué manuellement.

3. Système suivant l'une des revendications 1 ou 2 dans lequel le poste de pilotage (1) comporte un sélecteur (65) d'un réglage désiré parmi deux ou plusieurs réglages sur lequel une action de commande doit être maintenue pendant la durée des modifications de réglages réalisées par le système de gestion des réglages (6).

4. Système suivant l'une des revendications précédentes dans lequel l'au moins un élément réglable est associé à une commande manuelle de modification du réglage indépendamment du système de gestion des réglages (6).

5. Système suivant l'une des revendications précédentes dans lequel le système de gestion des réglages (6) commande :
- le réglage d'une position longitudinale (211) d'une assise (21) d'un siège de pilotage (2) et ou ;
- le réglage d'une position transversale (213) d'une assise (21) d'un siège de pilotage (2) et ou ;
- le réglage d'une position en hauteur (212) au-dessus d'un plancher (12) du poste de pilotage d'une assise (21) d'un siège de pilotage (2) et ou ;
- le réglage d'une position d'un palonnier (41) de pilotage et ou ;
- le réglage d'une position en hauteur (241) et ou en inclinaison (642) d'un accoudoir de pilotage (24) et ou ;
- le réglage en inclinaison (221) d'un dossier (22) d'un siège de pilotage et ou d'une position en hauteur et ou en profondeur (231) d'un appui lombaire (23) du dossier (22) et ou ;
- le réglage d'un, deux ou plusieurs aérateurs (51) individuels en orientations et ou en débits et ou en températures de soufflage et ou ;
- le réglage d'un, deux ou plusieurs éclairages (52) individuels en orientation et ou en intensité lumineuse.

6. Système suivant l'une des revendications précédentes dans lequel les données (641) caractéristiques des réglages des éléments commandés par le système de gestion des réglages (6) et fonction du pilote sont mémorisées dans un média mobile (642) du dispositif et lues par des moyens de reconnaissance (64) du système de gestion des réglages (6).

7. Système suivant la revendication 6 dans lequel le média mobile (642) comporte en mémoire aux moins deux ensembles de données (641) caractéristiques des réglages des éléments commandés par le système de gestion des réglages (6) associées à des modèles de postes de pilotage différents et dans lequel le système de gestion des réglages (6) du poste de pilotage du dispositif comporte des moyens de sélection, parmi lesdits au moins deux ensembles de données, des données correspondant audit poste de pilotage.

8. Poste de pilotage suivant la revendication 6 ou la revendication 7 dans lequel le média mobile (642) comporte en outre des moyens d'authentification du pilote dont sont fonction les données (641) caractéristiques des réglages des éléments commandés par le système de gestion des réglages (6) des aux moins deux ensembles de données.

## Patentansprüche

1. System, das ein Flugzeugcockpit (1) umfasst, wobei das Cockpit wenigstens ein Element enthält, das durch wenigstens eine einstellbare Komfort- oder Sicherheitseinrichtung (2, 24, 41, 51, 52), deren Einstellung durch einen Piloten zwischen zwei oder mehr Werten modifizierbar ist, einstellbar ist, wobei die Werte im Voraus als Funktion persönlicher Kriterien des Piloten erzeugt werden, wobei das wenigstens eine einstellbare Element (2, 24, 41, 51, 52) durch ein Einstellungssteuersystem (6) gesteuert wird, das einen Speicher (641) für charakteristische Werte der im Voraus erzeugten Werte und eine Steuerung des Cockpits zum Ändern von Einstellungen umfasst, derart, dass eine Einwirkung durch den Piloten auf die Steuerung die Einstellung des wenigstens einen einstellbaren Elements von einem aktuellen Wert zu einem vorgegebenen charakteristischen Wert einer von dem Piloten gewünschten gewählten Einstellung unter wenigstens zwei verschiedenen Einstellungen modifiziert, **dadurch gekennzeichnet, dass** das System eine Bodenstation (645) umfasst, um charakteristische Daten (641) der Einstellungen der Elemente, die durch das Einstellungssteuersystem (6) gesteuert werden und von dem Piloten abhängen und von der Bodenstation (645) gespeichert werden, über eine Verbindung (644) an Erkennungsmittel (64) des Einstellungssteuersystems (6) des Flugzeugs zu senden.

2. **System nach Anspruch 1, wobei das** Einstellungssteuersystem (6) in dem Cockpit (1) eine Einstellvalidierungssteuerung umfasst, um die charakteristischen Daten (641) der Einstellungen der Elemente, die durch das Einstellungssteuersystem (6) gesteuert werden, entsprechend einer vorher manuell ausgeführten Einstellung zu speichern.

3. System nach einem der Ansprüche 1 oder 2, wobei das Cockpit (1) eine Wähleinrichtung (65) einer gewünschten Einstellung unter zwei oder mehr Einstellungen umfasst, bei der eine Steuereinwirkung während der Dauer der Modifikationen der von dem Einstellungssteuersystem (6) ausgeführten Einstellungen gehalten werden muss.

4. System nach einem der vorhergehenden Ansprüche, wobei das wenigstens eine einstellbare Element einer manuellen Steuerung zur Modifikation der Einstellung unabhängig von dem Einstellungssteuersystem (6) zugeordnet ist.

5. System nach einem der vorhergehenden Ansprüche, wobei das Einstellungssteuersystem (6) steuert:
- die Einstellung einer longitudinalen Position (211) einer Sitzfläche (21) eines Pilotensitzes (2); und/oder
- die Einstellung einer transversalen Position (213) einer Sitzfläche (21) eines Pilotensitzes (2); und/oder
- die Einstellung einer Höhenposition (212) einer Sitzfläche (21) eines Pilotensitzes (2) über dem Boden (12) des Cockpits; und/oder
- die Einstellung einer Position eines Steuerpedals (41); und/oder
- die Einstellung einer Höhenposition (241) oder einer Neigungsposition (642) einer Pilotenarmlehne (24); und/oder
- die Einstellung der Neigung (221) einer Rückenlehne (22) eines Pilotensitzes und/oder einer Höhen- und/oder Tiefenposition (231) einer Lordosenstütze (23) der Rückenlehne (22); und/oder
- die Einstellung einer, zweier oder mehrerer einzelner Belüftungsauslässe (51) hinsichtlich Blasorientierung und/oder Blasdurchsatz und/oder Blastemperatur; und/oder
- die Einstellung einer, zweier oder mehrerer einzelner Beleuchtungen (52) hinsichtlich Lichtorientierung und/oder Lichtstärke.

6. System nach einem der vorhergehenden Ansprüche, wobei die charakteristischen Daten (641) der Einstellungen der Elemente, die von dem Einstellungssteuersystem (6) und in Abhängigkeit vom Piloten gesteuert werden, in einem mobilen Medium (642) der Vorrichtung gespeichert werden und von Wiedergewinnungsmitteln (64) des Einstellungssteuersystems (6) gelesen werden.

7. System nach Anspruch 6, wobei das mobile Medium (642) im Speicher wenigstens zwei Gesamtheiten charakteristischer Daten (641) der Einstellungen der Elemente, die von dem Einstellungssteuersystem (6) gesteuert werden, enthält, die verschiedenen Cockpitmodellen zugeordnet sind, und wobei das Einstellungssteuersystem (6) des Cockpits der Vorrichtung Mittel zum Auswählen unter den wenigstens zwei Datengesamtheiten der Daten, die dem Cockpit entsprechen, umfasst.

8. Cockpit nach Anspruch 6 oder Anspruch 7, wobei das mobile Medium (642) außerdem Mittel zum Authentifizieren des Piloten, von dem die charakteristischen Daten (641) der Einstellungen der durch das Einstellungssteuersystem (6) gesteuerten Elemente der wenigstens zwei Datengesamtheiten abhängen, umfasst.

## Claims

1. System including an aircraft cockpit (1), said cockpit including at least one adjustable element of at least one item of comfort- and/or safety-adjustable equipment (2,24,41,51,52) the adjustment of which is modifiable between two or more values by a pilot, said values being previously established as a function of personal criteria of said pilot, the at least one adjustable element (2,24,41,51,52) being controlled by an adjustment management system (6) including a memory of data (641) characteristic of said previously established values and including a cockpit control for changing the adjustments such that an action by the pilot on said control modifies the adjustment of the at least one adjustable element from a current value to a predetermined value characteristic of a selected adjustment desired by the pilot from among at least two different adjustments, **characterized in that** the system includes a ground station (645) for transmission, by a link (644) to recognition means (64) of the aircraft adjustment management system (6), of the data (641) characteristic of the adjustments of the elements controlled by the adjustment management system (6) and a function of the pilot, stored in memory by said ground station (645).

2. System according to Claim 1, wherein the adjustment management system (6) includes in the cockpit (1) an adjustment validation control to store in memory the data (641) characteristic of the adjustments of the elements controlled by the adjustment management system (6) corresponding to an adjustment previously carried out manually.

3. System according to one of Claims 1 or 2, wherein the cockpit (1) includes a selector (65) of a desired adjustment from among two or more adjustments on which a control action must be maintained for the duration of the adjustment modifications performed by the adjustment management system (6).

4. System according to one of the preceding claims, wherein the at least one adjustable element is associated with a manual control for modifying the adjustment independently of the adjustment management system (6).

5. System according to one of the preceding claims, wherein the adjustment management system (6) controls:
- the adjustment of a longitudinal position (211) of a seat cushion (21) of a pilot seat (2) and/or;
- the adjustment of a transversal position (213) of a seat cushion (21) of a pilot seat (2) and/or;
- the adjustment of a height position (212) above a floor (12) of the cockpit of a seat cushion (21) of a pilot seat (2) and/or;
- the adjustment of a position of the pilot rudder pedals (41) and/or;
- the adjustment of a height position (241) and/or an inclination position (642) of a pilot arm rest (24) and/or;
- the adjustment of the inclination (221) of a seat back (22) of a pilot seat and/or of a height position and/or a depth position (231) of a lumbar support (23) of the seat back (22) and/or;
- the adjustment of the orientations and/or flow rates and/or supply air temperatures of one, two or more individual ventilators (51) and/or;
- the adjustment of the orientation and/or luminous intensity of one, two or more individual lights (52).

6. System according to one of the preceding claims, wherein the data (641) characteristic of the adjustments of the elements controlled by the adjustment management system (6) and a function of the pilot are stored in memory in a mobile medium (642) of the device and read by recognition means (64) of the adjustment management system (6).

7. System according to Claim 6, wherein the mobile medium (642) includes in memory at least two sets of data (641) characteristic of the adjustments of the elements controlled by the adjustment management system (6) and associated with various models of cockpits, and wherein the cockpit adjustment management system (6) of the craft includes means for selecting, from among said at least two sets of data, the data corresponding to said cockpit.

8. Cockpit according to Claim 6 or Claim 7, wherein the mobile medium (642) furthermore includes pilot authentication means of which the data (641) characteristic of the adjustments of the elements controlled by the adjustment management system (6) of the at least two sets of data are a function.
